**Europäisches Patentamt**

**European Patent Office**

**Office européen des brevets**

(19)

(11) **EP 1 208 661 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.7: **H04B 17/00**, H04B 7/005, H04Q 7/38

(21) Anmeldenummer: **00963948.5**

(86) Internationale Anmeldenummer:
**PCT/DE2000/002981**

(22) Anmeldetag: **31.08.2000**

(87) Internationale Veröffentlichungsnummer:
**WO 2001/019000 (15.03.2001 Gazette 2001/11)**

(54) **VERFAHREN ZUR MESSUNG VON INTERZELL-INTERFERENZ IN EINEM FREQUENZKANAL**

METHOD FOR MEASURING THE INTERCELL INTERFERENCE IN A FREQUENCY CHANNEL

PROCEDE DE MESURE D'INTERFERENCES INTERCELLULAIRES DANS UN CANAL DE FREQUENCES

(84) Benannte Vertragsstaaten:
**DE ES FR GB IT**

(30) Priorität: **02.09.1999 DE 19941846**

(43) Veröffentlichungstag der Anmeldung:
**29.05.2002 Patentblatt 2002/22**

(73) Patentinhaber: **SIEMENS AKTIENGESELLSCHAFT**
**80333 München (DE)**

(72) Erfinder:
• **WEGMANN, Bernhard**
**83607 Holzkirchen (DE)**
• **TRAYNARD, Jean-Michel**
**81667 München (DE)**
• **DILLINGER, Markus**
**81737 München (DE)**
• **KRAUSE, Jörn**
**12107 Berlin (DE)**
• **OESTREICH, Stefan**
**83607 Holzkirchen (DE)**

(56) Entgegenhaltungen:
**WO-A-97/33394        WO-A-97/37443**
**WO-A-99/05878**

EP 1 208 661 B1

**Beschreibung**

Die Erfindung betrifft ein Verfahren zur Messung von Interzell-Interferenz in einem Frequenzkanal eines Funk-Kommunikationssystems.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Aus DE 198 10 285 ist bekannt, daß zur Unterscheidung der Signalquellen und damit zur Auswertung der Signale als Frequenzmultiplex (FDMA), Zeitlagenmultiplex (TDMA) oder Codemultiplex (CDMA) bekannte Verfahren dienen, die auch miteinander kombiniert werden können. Eine Ausprägung des Zeitlagenmultiplex (TDMA) ist das TDD (time division duplex) Übertragungsverfahren, bei dem in einem gemeinsamen Frequenzband die Übertragung sowohl in Aufwärtsrichtung, d.h. von der Basisstation zur Teilnehmerstation, als auch in Abwärtsrichtung von der Teilnehmerstation zur Basisstation erfolgt.

Die Separierung eines Signalgemisches, der bei CDMA-Systemen einer Datenschätzung entspricht, läßt sich in bekannter Weise durch eine signalangepaßte Filterung (MF, Matched Filtering) bewerkstelligen, die jeweils auf den Spreizkode (CDMA-Kode) des Teilnehmers angepaßt ist. Ein diese signalangepaßte Filterung durchführender Empfänger läßt sich beispielsweise als eine Bank von Korrelatoren oder als eine Bank von RAKE-Empfängern realisieren.

Außerdem läßt sich in bekannter Weise eine Separierung eines Signalgemisches mit Hilfe einer sogenannten gemeinsamen Detektion (JD, Joint Detection) durchführen, die beispielsweise in DE 41 21 356 C2 und DE 43 29 320 A1 beschrieben ist.

Eine wichtige Größe für Übergabeprozeduren oder Kanalzuteilungsverfahren, beispielsweise dem DCA - Dynamik Channel Allocation, ist die Interzell-Interferenz. Innerhalb einer Funkzelle einer Basisstation werden in Aufwärts- und Abwärtsrichtung über die Funkschnittstelle Informationen übertragen, die durch Aussendungen von Basisstationen und Teilnehmerstationen weiterer Funkzellen gestört werden. Diese Interzell-Interferenz kann die Übertragungsqualität erheblich verschlechtern und sogar zum Abriß der Verbindung führen.

Die Bestimmung der Interzell-Interferenz mittels der gemeinsamen Detektion ist beispielsweise aus der DE 196 15 828 C2 bekannt. Bei der Verwendung der gemeinsamen Detektion wird die Intrazell-Interferenz durch eine Subtraktion vom empfangenen Signalgemisch eliminiert, so daß die Interzell-Interferenz für eine verbesserte Detektion vom Signalgemisch getrennt werden kann. Die Anwendung der gemeinsamen Detektion ist jedoch insbesondere für die Teilnehmerstation aufwendig.

Der Erfindung liegt die Aufgabe zu Grunde, ein Verfahren zur Messung einer Interzell-Interferenz in einem Frequenzkanal eines Funk-Kommunikationssystems anzugeben, das keine gemeinsame Detektion benötigt. Diese Aufgabe wird durch das Verfahren mit den Merkmalen des Patentanspruchs 1 gelöst. Vorteilhafte Weiterbildungen der Erfindung sind den Unteransprüchen zu entnehmen.

Im erfindungsgemäßen Verfahren zur Messung von Interzell-Interferenz in einem Frequenzkanal eines Funk-Kommunikationssystems werden im Frequenzkanal gleichzeitig Informationen zu mehreren Teilnehmerstationen übertragen. Die Informationen werden mit Spreizkodes separiert. Ein solches Funk-Kommunikationssystem ist beispielsweise als CDMA-System bekannt. Orthogonale Spreizkodes eines CDMA-Systems sind gegenüber nicht-orthogonalen Spreizkodes besser zu separieren. Der Frequenzkanal eines CDMA-Systems ist für die Spreizung entsprechend breitbandig. Trotz der Verwendung von Separierungsverfahren, beispielsweise einem räumlichen Separierungsverfahren SDMA (Space Division Multiple Access), kann die Übertragung von Basisstationen und Teilnehmerstationen anderer Funkzellen, die im selben Frequenzkanal senden, gestört werden. Diese Störung wird als Interzell-Interferenz bezeichnet.

Im Frequenzkanal wird von einer ersten Teilnehmerstation eine Gesamtempfangsleistung gemessen. Die Gesamtempfangsleistung läßt sich vorteilhaft direkt aus dem HF-Empfangssignal bestimmen. Für den selben Frequenzkanal wird eine Summe der Sendeleistungen der von einer ersten Basisstation verwendeten Spreizkodes bestimmt. Hierzu wird beispielsweise entweder das HF-Sendesignal der Basisstation gemessen, oder die Summe der Sendeleistung der einzelnen verwendeten Spreizkodes wird aus vorgegebenen Steuerungsparametern zur Sendeleistungsregelung errechnet.

Die Interzell-Interferenz für die Funkzelle der ersten Basisstation wird aus einer Differenz zwischen der Gesamtempfangsleistung und der Summe der Sendeleistungen bestimmt. Die Interzell-Interferenz ist so besonders einfach und kostengünstig zu ermitteln. Mit der Messung der Interzell-Interferenzen mehrerer Frequenzkanäle wird beispielsweise für eine Intrazell-Übergabe (handover) der Frequenzkanal mit der geringsten Interzell-Interferenz ermittelt.

In einer vorteilhaften Weiterbildung der Erfindung wird von der ersten Teilnehmerstation ein Meßergebnis der Gesamtempfangsleistung einer netzseitigen Einrichtung signalisiert. Durch die Signalisierung des Meßergebnisses steht die Gesamtempfangsleistung prinzipiell allen netzseitigen Einrichtungen zur Verfügung, wenn mit entsprechenden Protokollen die Signalisierung innerhalb des Netzes sichergestellt ist.

In einer besonders vorteilhaften Weiterbildung der Erfindung werden die Sendeleistungen durch eine Subtraktion eines Pfadverlustes zwischen der ersten Basisstation und der ersten Teilnehmerstation korrigiert. So werden die ermittelten Interzell-Interferenzen mehrerer Teilnehmerstationen vergleichbar und die Änderung der Interzell-Interferenz aufgrund der Änderung des Pfadverlustes einer bewegten Teilnehmerstation wird herausgerechnet und das Ergebnis präzisiert. Der Pfadverlust wird aus der Differenz zwischen Sendeleistung und Empfangsleistung eines Pilotkanals berechnet. Die Empfangsleistung wird von der Teilnehmerstation gemessen. Mit einer entsprechenden Signalisierung wird die Empfangsleistung und/oder der Pfadverlust ebenfalls mindestens einer netzseitigen Einrichtung zur Verfügung gestellt.

Es ist vorteilhaft, daß die Messung der Gesamtempfangsleistung und die Bestimmung der Sendeleistungen gleichzeitig erfolgt, so daß die zeitlich veränderlichen Übertragungsbedingungen das Meßergebnis nicht unnötig verfälschen. Günstigerweise werden die Leistungen innerhalb eines Zeitintervalls oder Zeitschlitzes bestimmt und die Interzell-Interferenz ermittelt.

Vorteilhafterweise wird die Messung der Interzell-Interferenz innerhalb eines Zeitintervalls durchgeführt. Das Zeitintervall ist entweder - beispielsweise durch den Netzbetreiber - vorgegeben oder wird von einer netzseitigen Einrichtung zur Zuteilung funktechnischer Ressourcen, der Basisstation oder der Teilnehmerstation temporär festgelegt. Mit kurzen Zeitintervallen wird der Meßaufwand begrenzt.

Erfolgt die Messung der Interzell-Interferenz dagegen über ein langes Zeitintervall, wo wird die Messung präzisiert und Ressourcen der Signalisierung der Meßergebnisse werden eingespart.

Besonders vorteilhaft ist das Zeitintervall mindestens ein Teil eines Zeitschlitzes eines TDMA-Systems. Ist das Zeitintervall entsprechend kurz werden verschiedene Frequenzkanäle innerhalb der Zeitdauer eines Zeitschlitzes ausgemessen wodurch sehr viele Meßergebnisse über mehrere Frequenzkanäle innerhalb kürzester Zeit zur Verfügung stehen. Dies ist besonders vorteilhaft für einen Erstzugriff einer Teilnehmerstation, da ein Verbindungsaufbau möglichst schnell erfolgen soll und erfindungsgemäß innerhalb einer kurzen Zeitspanne Meßergebnisse für Übertragungskanäle mit möglichst guter Übertragungsqualität ermittelt werden sollen.

Ist dagegen ein Verbindungsaufbau bereits erfolgt, wird die Interzell-Interferenz vorteilhaft über mehrere Zeitschlitze gemessen. So wird beispielsweise die Interzell-Interferenz im ersten Zeitschlitz eines Rahmens in 6 aufeinanderfolgenden Rahmen gemessen.

Wird im selben Zeitintervall bzw. Zeitschlitz die Gesamtempfangsleistung gemessen und ein Pilotkanal gesendet, so ist das Meßergebnis der Interzell-Interferenz um die Empfangsleistung des Pilotkanals verfälscht. Vorteilhaft wird das Meßergebnis der Gesamtempfangsleistung durch Subtraktion um das Meßergebnis der Empfangsleistung des Pilotkanals verringert und somit korrigiert. Dies setzt voraus, daß die Teilnehmerstation die Empfangsleistung des Pilotkanals getrennt von allen anderen Empfangssignalen messen kann.

Im Folgenden wird die Erfindung anhand von Ausführungsbeispielen bezugnehmend auf zeichnerische Darstellungen näher erläutert.

Dabei zeigen

FIG 1 ein Blockschaltbild eines Funk-Kommunikations-systems, insbesondere eines Mobilfunksystems,

FIG 2 eine schematische Darstellung der Funkschnittstelle zwischen Basisstationen und Teilnehmerstationen, und

FIG 3 eine schematische Darstellung des Ablaufs des erfindungsgemäßen Verfahrens.

Das in FIG 1 dargestellte und beispielhaft als ein Mobilfunksystem ausgestaltete Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung zur Zuteilung funktechnischer Ressourcen RNC verbunden. Jede dieser Einrichtungen RNC ermöglicht wiederum eine Verbindung zu zumindest einer Basisstation BS1 bzw. BS2.

Diese Basisstation BS1 ist eine Funkstation, die über eine Funkschnittstelle Kommunikationsverbindungen zu mobilen oder stationären Teilnehmerstationen MS1, MS2 und MS3 innerhalb einer Funkzelle FZ1 aufbauen und signalisieren kann. Die Funktionalität dieser Struktur wird von dem erfindungsgemäßen Verfahren genutzt. Ein Einsatz in beispielsweise einem drahtlosen Teilnehmeranschlußsystem (Access-Network) ist dabei ebenso möglich.

Die Basisstation BS1 hat in dem Ausführungsbeispiel in einem Frequenzkanal FK mehrere Kommunikationsverbindungen zu den Teilnehmerstationen MS1, MS2 und MS3 aufgebaut. Zur Separierung der zu übertragenden Informationen verwendet jede Teilnehmerstation MS1 bis MS3 einen individuellen Spreizkode sk1, sk2 und sk3.

Eine weitere Basisstation BS2, die beispielsweise eine benachbarte Funkzelle FZ2 versorgt, hat eine Kommunikationsbeziehung zu der Teilnehmerstation MSI aufgebaut. Für die Kommunikationsbeziehung wird ebenfalls der Frequenzkanal FK mit dem Spreizkode sk1 zur Übertragung genutzt. Da die zweite Basisstation BS2 im Frequenzkanal FK im Ausführungsbeispiel omnidirektional abstrahlt, verschlechtern die im Frequenzkanal FK gesendeten Informationen der zweiten Basisstation BS2 als Interzell-Interferenz II die Übertragung zwischen der ersten Basisstation BS1 und der ersten Teilnehmerstation MS1. Auch die von der Teilnehmerstation MSI gesendeten Informationen können die Übertragung im Frequenzkanal der benachbarten Funkzelle FZ1 stören.

Das Ausführungsbeispiel der FIG 1 ist als "worst case" zu betrachten, da die Wiederverwendung desselben Spreizkodes sk1 eines Funkkanals FK im Normalfall erst in großen geographischen Abständen erfolgt und zwei benachbarte Funkzellen FZ1 und FZ2 in denen die Antennen A der Basisstation BS1 und BS2 omnidirektional abstrahlen nicht denselben Spreizkode sk1 verwenden. Eine andere Möglichkeit zur Verringerung der Interzell-Interferenz II ist die Verwendung von richtungsselektiven Antennen. Sendet die im Ausführungsbeispiel verwendete Antenne A lediglich in die Richtung der Teilnehmerstation MSI wird die Interzell-Interferenz II weiter verringert.

Eine beispielhafte Rahmenstruktur der Funkschnittstelle eines TDD-Übertragungsverfahrens ist aus der FIG 2 ersichtlich. Gemäß einer TDMA-Komponente ist eine Aufteilung eines breitbandigen Frequenzkanals FK, beispielsweise der Bandbreite 5 MHz, in mehrere Zeitschlitze ts, beispielsweise 15 Zeitschlitze ts0 bis ts14 vorgesehen. Ein Übertragungskanal UK innerhalb des Frequenzkanals FK ist durch einen Zeitschlitz ts und einen Spreizkode sk definiert. Innerhalb eines breitbandigen Frequenzkanals FK werden die aufeinanderfolgenden Zeitschlitze ts nach einer Rahmenstruktur gegliedert. So werden 15 Zeitschlitze ts0 bis ts14 zu einem Rahmen zusammengefaßt.

Bei einer Nutzung eines TDD-Übertragungsverfahrens wird ein Teil der Zeitschlitze ts0 bis ts7 in Aufwärtsrichtung und ein Teil der Zeitschlitze ts8 bis ts14 in Abwärtsrichtung benutzt, wobei die Übertragung in Aufwärtsrichtung beispielsweise vor der Übertragung in Abwärtsrichtung erfolgt. Dazwischen liegt ein Umschaltzeitpunkt SP, der entsprechend dem jeweiligen Bedarf an Übertragungskanälen UK für die Auf- und Abwärtsrichtung flexibel positioniert wird. In gleicher Weise sind die weiteren Übertragungskanäle UK strukturiert.

Innerhalb der Zeitschlitze ts eines Frequenzkanals FK werden Informationen mehrerer Verbindungen in Funkblöcken übertragen. Diese Funkblöcke bestehen aus Abschnitten mit Daten d, in denen jeweils Abschnitte mit empfangsseitig bekannten Trainingssequenzen tseq1 bis tseqn eingebettet sind. Die Daten d sind verbindungsindividuell mit einer Feinstruktur, einem Spreizkode sk (CDMA-Kode), gespreizt, so daß empfangsseitig beispielsweise n Verbindungen durch diese CDMA-Komponente separierbar sind. Die Kombination aus einem Frequenzkanal FK, einem Zeitschlitz ts und einem Spreizkode sk definiert einen Übertragungskanal UK oder einen Signalisierungskanal, die für die Übertragung von Nutz- bzw. Signalisierungsinformationen genutzt werden.

Mit Channel-Pooling werden einer Kommunikationsverbindung jeweils ein oder mehrere Übertragungskanäle UK zugewiesen. Das Verfahren des Channel-Poolings wird vorteilhaft eingesetzt, um Kommunikationsverbindungen zu bzw. von Teilnehmerstationen MS1, MS2 oder MS3 mit unterschiedlichen Datenraten zu realisieren oder um auf einer Kommunikationsverbindung mehrere Dienste parallel zu betreiben. Hierzu werden mehrere Übertragungskanäle UK zur Übertragung für eine Verbindung zusammengefaßt.

Die Spreizung von einzelnen Symbolen der Daten d mit Q Chips bewirkt, daß innerhalb der Symboldauer tsym Q Subabschnitte der Dauer tchip übertragen werden. Die Q Chips bilden dabei den individuellen Spreizkode sk. Weiterhin ist innerhalb des Zeitschlitzes ts eine Schutzzeit gp zur Kompensation unterschiedlicher Signallaufzeiten der Verbindungen aufeinanderfolgender Zeitschlitze ts vorgesehen.

Die Separierung der zu übertragenden Informationen durch Zeitschlitze ts hat zur Folge, daß die Interzell-Interferenz II von Zeitschlitz ts zu Zeitschlitz ts stark variieren kann. Sind die Basisstationen BS1, BS2 untereinander synchronisiert, so daß die Zeitschlitze ts0 bis ts14 der Basisstationen BS1 und BS2 synchron übertragen werden, mißt die Teilnehmerstation MS1 die Gesamtempfangsleistung gep (siehe FIG 3) in mindestens einem Zeitschlitz ts zur Übertragung in Abwärtsrichtung, um die zeitschlitzspezifische Interzell-Interferenz II zu bestimmen.

In FIG 3 ist beispielhaft ein Ablauf des erfindungsgemäßen Verfahrens in einem TD-CDMA Funk-Kommunikationssystem dargestellt. Verdeutlicht werden Verfahrensschritte innerhalb einer Teilnehmerstation MS1 und netzseitigen Einrichtungen RNC, BS1, sowie die Signalisierungen und Informationsübertragungen zur Bestimmung einer Interzell-Interferenz II.

In Schritt 1 wird von der netzseitigen Einrichtung zur Zuteilung funktechnischer Ressourcen RNC zur Basisstation BS1 eine Anforderung zur Messung der Interzell-Interferenz II für die Teilnehmerstation MS1 übertragen. Der Grund für die Anforderung ist beispielsweise eine notwendige Messung zur Aktualisierung einer Liste zur dynamischen Kanalzuteilung DCA (Dynamic Channel Allocation). Ein alternativer Grund der Anforderung ist, daß ein Parameter BER zur Empfangsqualität der Informationen, die von der Teilnehmerstation MS1 empfangen werden, einen Schwellwert unterschreitet. Der Parameter BER ist beispielsweise eine Bitfehlerwahrscheinlichkeit, die von der Teilnehmerstation MS1 mit einer Signalisierungsinformation an die netzseitige Einrichtung zur Zuteilung funktechnischer Ressourcen RNC übermittelt wird.

Alternativ, im Ausführungsbeispiel der FIG 3 nicht dargestellt, erfolgt die Anforderung der Messung durch die Teilnehmerstation MS1. Unterschreitet der Parameter BER einen Schwellwert, mißt die Teilnehmerstation MS1 die Gesamtempfangsleistung gep mindestens eines Zeitschlitzes ts und signalisiert die Meßergebnisse einer netzseitigen Einrichtung zur Zuteilung funktechnischer Ressourcen RNC. Unterschreitet der Parameter BER einen weiteren Schwellwert, so leitet die netzseitige Einrichtung zur Zuteilung funktechnischer Ressourcen RNC für die Teilnehmerstation MS1 eine Intrazell-Übergabe (Intracell-Handover) für einen der zuvor gemessenen Zeitschlitze ts ein. Der weitere Schwellwert wird vorteilhafterweise von der netzseitige Einrichtung zur Zuteilung funktechnischer Ressourcen RNC festgelegt. Auch ist eine Anforderung einer Intrazell-Übergabe durch die Teilnehmerstation MS1 denkbar.

Im Schritt 2 des Ausführungsbeispiels sendet die Basisstation BS1 ein Steuersignal STS in einem Signalisierungskanal und allgemeine Signalisierungsinformationen in einen Pilotkanal CCPCH an die Teilnehmerstation MS1. Mit Hilfe des Steuersignals STS steuert die Basisstation BS1 die Messung der Interzell-Interferenz II. Die Basisstation BS1 gibt der Teilnehmerstation MS1 beispielsweise den zu messenden Zeitschlitz ts vor.

Im Schritt 3 wird eine Summe von Sendeleistungen sks1 bis sksn der von der Basisstation BS1 verwendeten Spreizkodes sk im auszumessenden Zeitschlitz ts bestimmt. Für den Pilotkanal CCPCH ermittelt die Basisstation BS1 eine Sendeleistung spi. Mit einer Sendeleistungsregelung wird die Sendeleistung eines Übertragungskanals von der Basisstation BS1 zu der Teilnehmerstation MS1 geregelt. Aus zugehörigen Regelungsparametern kann in einem Prozessor (CPU) die Sendeleistungen sks1 bis sksn bestimmt und bis zur Bestimmung der Interzell-Inter-ferenz II in einem Speicher zwischengespeichert werden. Die Sendeleistung spi des Pilotkanals CCPCH wird auf analoge Weise ermittelt, wobei die Sendeleistung spi des Pilotkanals CCPCH über einen längeren Zeitraum als konstant angenommen werden kann.

In Schritt 4 wird zeitgleich zu Schritt 3 eine Messung der Gesamtempfangsleitung gep des zu messenden Zeitschlitzes ts durchgeführt. Auch die Empfangsleistung epi des Pilotkanals CCPCH wird zeitgleich zur Ermittlung der Sendeleistung spi des Pilotkanals CCPCH gemessen. Für die Messungen wird vorteilhaft ein Analog-Digital-Wandler eingesetzt, der eine weitere Auswertung der Meßgebnisse mit einem Prozessor (CPU) ermöglicht. Die Meßergebnisse und Auswertungsergebnisse werden in einem Speicher gespeichert, um über mehrere zeitlich versetzte Messungen zu mitteln oder statistische Auswertungen vorzunehmen. Die Meßergebnisse der Gesamtempfangsleistung gep und der Empfangsleistung epi des Pilotkanals CCPCH werden in Schritt 5 in einer entsprechenden Signalisierungsinformation an die Basisstation BS1 übertragen.

Die Schritte 2 bis 5 werden beispielsweise zyklisch für mindestens einen Zeitschlitz ts wiederholt und die Ergebnisse gemittelt, um die Variationen der Ergebnisse über einen bestimmten Zeitraum, beispielsweise 1 Sekunde, herauszurechnen.

In Schritt 6 bestimmt die Basisstation BS1 einen Pfadverlust pv aus der Differenz zwischen Sendeleistung spi und Empfangsleistung epi des Pilotkanals CCPCH. Die Interzell-Interferenz II für den gemessenen Zeitschlitz ts wird nach der Formel

$$II = gep - \sum_{x=1}^{n}(sksx - pv)$$

mit allen Größen in dB berechnet. Von der Gesamtempfangsleistung gep wird die Summe aus den Sendeleistungen sks1 bis sksn der von der Basisstation BS1 verwendeten Spreizkodes sk subtrahiert, um die Interzell-Interferenz II zu erhalten. In einer vorteilhaften Weiterbildung der Erfindung werden die Interzell-Interferenzen II zusammen mit den Spreizkodes sk des Zeitschlitzes ts ausgewertet und temporär gespeichert, da die Interzell-Inter-ferenzen II mit der Änderung der verwendeten Spreizkodes sk in der Liste zur dynamischen Kanalzuteilung DCA (Dynamic Channel Allocation) variieren.

Um vergleichbare Ergebnisse mit den Messungen weiterer Teilnehmerstationen MS2, MS3, MSI zu erhalten wird die Sendeleistung sksx des jeweiligen Spreizkodes sk jeweils um den Pfadverlust pv verringert. Mit dieser Normierung werden die Basisstation BS1, BS2 auch untereinander verglichen, um Ergebnisse über die Störungen, Auslastungen und Funkverkehrsdichte der einzelnen Funkzellen FZ1, FZ2 zu erhalten.

In Schritt 7 werden die zuvor bestimmten Interzell-Inter-ferenzen II der netzseitige Einrichtung zur Zuteilung funktechnischer Ressourcen RNC signalisiert. In der netzseitigen Einrichtung zur Zuteilung funktechnischer Ressourcen RNC werden die Interzell-Interferenzen II beispielsweise als Eingangsgröße der dynamischen Kanalzuteilung DCA verwendet. Alternativ, in FIG 3 nicht dargestellt, wird die Interzell-Interferenz II mit der oben genannten Formel in der netzseitigen Einrichtung zur Zuteilung funktechnischer Ressourcen RNC berechnet. Hierzu werden die Sendeleistungen sks1 bis sksn, der Pfadverlust pv und die Gesamtempfangsleistung gep von der Basisstation BS1 zu der netzseitigen Einrichtung zur Zuteilung funktechnischer Ressourcen RNC signalisiert.

Die Messung der Interzell-Interferenz II wird alternativ, in FIG 3 nicht dargestellt, durch die Teilnehmerstation MS1 im Zugriffsverfahren initiiert. Ein wahlfreier Vielfachzugriff der von der Teilnehmerstation MS1 in einem Signalisierungskanal (RACH - Random Access Channel) gesendet wird, wird von der Basisstation BS1 empfangen und ausgewertet. Gleichzeitig mit der Auswertung wird die Gesamtempfangsleistung gep und die Empfangsleistung epi des Pilotkanals CCPCH durch die Teilnehmerstation MS1 gemessen und die Sendeleistungen sks1 bis sksn, sowie spi eines oder mehrerer Zeischlitze ts durch die Basisstation BS1 bestimmt. Die gemessene Interzell-Interferenz gilt folgend als Entscheidungskriterium für eine Kanalvergabe.

**Patentansprüche**

1. Verfahren zur Messung von Interzell-Interferenz (II) in einem Frequenzkanal (FK) eines Funk-Kommunikationssystems, bei dem
im Frequenzkanal (FK) gleichzeitig Informationen zu mehreren Teilnehmerstationen (MS1,MS2,MS3) übertragen werden, die mit Spreizkodes (sk) separiert werden,
im Frequenzkanal (FK) eine Gesamtempfangsleistung (gep) von einer ersten Teilnehmerstation (MS1) gemessen wird,
im Frequenzkanal (FK) eine Summe von Sendeleistungen (sks1 bis sksn) der von einer ersten Basisstation (BS1) verwendeten Spreizkodes (sk) bestimmt wird, und
die Interzell-Interferenz (II) aus einer Differenz zwischen der Gesamtempfangsleistung (gep) und der Summe der Sendeleistungen (sks1 bis sksn) bestimmt wird.

2. Verfahren nach Anspruch 1, bei dem
ein Meßergebnis der Gesamtempfangsleistung (gep) einer netzseitigen Einrichtung (BS1,RNC) signalisiert wird, und
die Interzell-Interferenz (II) in der netzseitigen Einrichtung (BS1,RNC) bestimmt wird.

3. Verfahren nach einem der vorhergehenden Ansprüche, bei dem die Sendeleistungen (sks1 bis sksn) durch eine Subtraktion eines Pfadverlustes (pv) zwischen der ersten Basisstation (BS1) und der ersten Teilnehmerstation (MS1) korrigiert werden.

4. Verfahren nach Anspruch 3, bei dem
der Pfadverlust (pv) einer netzseitigen Einrichtung (RNC) signalisiert wird.

5. Verfahren nach einem der Ansprüche 3 oder 4, bei dem
von der ersten Teilnehmerstation (MS1) eine Empfangsleistung (epi) eines Pilotkanals (CCPCH) der ersten Basisstation (BS1) gemessen wird, und
der Pfadverlust (pv) aus der Differenz zwischen Sendeleistung (spi) des Pilotkanals (CCPCH) und der Empfangsleistung (epi) bestimmt wird.

6. Verfahren nach Anspruch 5, bei dem
das Meßergebnis der Empfangsleistung (epi) einer netzseitigen Einrichtung (BS1,RNC) signalisiert wird.

7. Verfahren nach einem der vorhergehenden Ansprüche, bei dem die Messung der Gesamtempfangsleistung (gep) und die Bestimmung der Sendeleistungen (sks1 bis sksn) gleichzeitig erfolgt.

8. Verfahren nach einem der vorhergehenden Ansprüche, bei dem die Messungen innerhalb eines Zeitintervalls (ts) durchgeführt werden.

9. Verfahren nach Anspruch 8,
bei dem das Zeitintervall (ts) mindestens ein Teil eines Zeitschlitzes (ts) eines TDMA-Systems ist.

10. Verfahren nach einem der Ansprüche 8 oder 9, bei dem
ein Pilotkanal (CCPCH) während des Zeitintervalls (ts) gesendet wird, und
das Meßergebnis der Gesamtempfangsleistung (gep) durch Subtraktion um das Meßergebnis der Empfangsleistung (epi) des Pilotkanals (CCPCH) verringert wird.

11. Verfahren nach einem der vorhergehenden Ansprüche, bei dem die Messung der Interzell-Interferenz (II) zyklisch erfolgt.

12. Verfahren nach einem der vorhergehenden Ansprüche, bei dem
die Messung der Interzell-Interferenz (II) durch eine netzseitige Einrichtung (BS1,RNC) gesteuert wird.

13. Verfahren nach einem der Ansprüche 1 bis 11, bei dem
die Messung der Interzell-Interferenz (II) durch die erste Teilnehmerstation (MS1) gesteuert wird.

14. Verfahren nach einem der Ansprüche 12 oder 13, bei dem die Steuerung der Messung erfolgt, wenn ein Parameter (BER) zur Empfangsqualität der Informationen einen Schwellwert unterschreitet.

**Claims**

1. Method for measuring intercell interference (II) in a frequency channel (FK) in a radio communication system,
in which
information separated using spreading codes (sk) is transmitted simultaneously to a plurality of subscriber stations (MS1,MS2,MS3) in the frequency channel (FK), a total received power (gep) is measured in the frequency channel (FK) by a first subscriber station (MS1),
a sum of transmitted powers (sks1 to sksn) for the spreading codes (sk) used by a first base station (BS1) is determined in the frequency channel (FK), and the intercell interference (II) is determined from a difference between the total received power (gep) and the sum of the transmitted powers (sks1 to sksn).

2. Method according to Claim 1, in which
a measurement result for the total received power (gep) is signalled to a network device (BS1, RNC), and

the intercell interference (II) is determined in the network device (BS1,RNC).

3. Method according to in one of the preceding claims, in which
the transmitted powers (sks1 to sksn) are corrected by subtracting a path loss (pv) between the first base station (BS1) and the first subscriber station (MS1).

4. Method according to Claim 3, in which
the path loss (PV) is signalled to a network device (RNC).

5. Method according to one of Claims 3 or 4, in which
the first subscriber station (MS1) measures a received power (epi) on a pilot channel (CCPCH) associated with the first base station (BS1), and the path loss (pv) is determined from the difference between transmitted power (spi) on the pilot channel (CCPCH) and the received power (epi).

6. Method according to Claim 5, in which
the measurement result for the received power (epi) is signalled to a network device (BS1,RNC).

7. Method according to in one of the preceding claims, in which
the measurement of the total received power (gep) and the determination of the transmitted powers (sks1 to sksn) take place at the same time.

8. Method according to one of the preceding claims, in which
the measurements are performed within one time interval (ts).

9. Method according to Claim 8,
in which the time interval (ts) is at least part of a time slot (ts) in a TDMA system.

10. Method according to one of Claims 8 or 9, in which
a pilot channel (CCPCH) is transmitted during the time interval (ts), and
the measurement result for the total received power (gep) is reduced, by subtraction, by the measurement result for the received power (epi) on the pilot channel (CCPCH).

11. Method according to one of the preceding claims, in which
the intercell interference (II) is measured cyclically.

12. Method according to one of the preceding claims, in which
measurement of the intercell interference (II) is controlled by a network device (BS1,RNC).

13. Method according to one of Claims 1 to 11, in which
measurement of the intercell interference (II) is controlled by the first subscriber station (MS1).

14. Method according to one of Claims 12 or 13, in which
measurement is controlled if a parameter (BER) relating to the reception quality of the information falls below a threshold value.

## Revendications

1. Procédé de mesure d'une interférence intercellulaire (II) dans un canal de fréquences (FK) d'un système de transmission radio, dans lequel
des informations séparées par des codes d'étalement (sk) sont transmises simultanément à plusieurs stations d'abonnés (MS1, MS2, MS3) dans le canal de fréquences (FK),
une puissance totale de réception (gep) est mesurée dans le canal de fréquences (FK) par une première station d'abonné (MS1),
une somme de puissances d'émission (sks1 à sksn) des codes d'étalement (sk) utilisés par une première station de base (BS1) est déterminée dans le canal de fréquences (FK) et
l'interférence intercellulaire (II) est déterminée sur la base d'une différence entre la puissance totale de réception (gep) et la somme des puissances d'émission (sks1 à sksn).

2. Procédé selon la revendication 1, dans lequel un résultat de mesure de la puissance totale de réception (gep) est signalé à un dispositif de réseau (BS1, RNC) et dans lequel l'interférence intercellulaire (II) est déterminée dans ledit dispositif de réseau (BS1, RNC).

3. Procédé selon l'une des revendications précédentes, dans lequel les puissances d'émission (sks1 à sksn) sont corrigées par une soustraction d'une perte de chemin (pv) entre la première station de base (BS1) et la première station d'abonné (MS1).

4. Procédé selon la revendication 3, dans lequel la perte de chemin (pv) est signalée à un dispositif de réseau (RNC).

5. Procédé selon l'une des revendications 3 ou 4, dans lequel une puissance de réception (epi) d'un canal pilote (CCPCH) de la première station de base (BS1) est mesurée par la première station d'abonné (MS1) et dans lequel la perte de chemin (pv) est déterminée sur la base de la différence entre la puissance d'émission (spi) du canal pilote (CCPCH) et la puissance de réception (epi).

6. Procédé selon la revendication 5, dans lequel le résultat de mesure de la puissance de réception (epi) est signalé à un dispositif de réseau (BS1, RNC).

7. Procédé selon l'une des revendications précédentes, dans lequel la mesure de la puissance totale de réception (gep) et la détermination des puissances d'émission (sks1 à sksn) sont effectuées simultanément.

8. Procédé selon l'une des revendications précédentes, dans lequel les mesures sont exécutées à l'intérieur d'un intervalle temporel (ts).

9. Procédé selon la revendication 8, dans lequel l'intervalle temporel (ts) est au moins une partie d'un créneau temporel (ts) d'un système TDMA.

10. Procédé selon l'une des revendications 8 ou 9, dans lequel un canal pilote (CCPCH) est émis pendant l'intervalle temporel (ts) et le résultat de mesure de la puissance totale de réception (gep) est réduit par soustraction du résultat de mesure de la puissance de réception (epi) du canal pilote (CCPCH).

11. Procédé selon l'une des revendications précédentes, dans lequel la mesure de l'interférence intercellulaire (II) est exécutée cycliquement.

12. Procédé selon l'une des revendications précédentes, dans lequel la mesure de l'interférence intercellulaire (II) est commandée par un dispositif de réseau (BS1, RNC).

13. Procédé selon l'une des revendications 1 à 11, dans lequel la mesure de l'interférence intercellulaire (II) est commandée par la première station d'abonné (MS1).

14. Procédé selon l'une des revendications 12 ou 13, dans lequel la commande de la mesure se fait lorsqu'un paramètre (BER) de la qualité de réception des informations tombe en dessous d'une valeur seuil.